# EUROPEAN PATENT SPECIFICATION

(11) **EP 1 122 194 B1**
(45) Date of publication and mention of the grant of the patent: **10.11.2004**
(21) Application number: 01300846.1
(22) Date of filing: 31.01.2001
(51) Int. Cl.: B65G 1/137

(54) **Apparatus and method for automated warehousing**
Vorrichtung und Verfahren für automatisiertes Warenlager
Dispositif et procédé de stockage automatisé

(30) Priority: 01.02.2000 US 494860
(43) Date of publication of application: 08.08.2001
(73) Proprietor: Johnson & Johnson Vision Care, Inc., Jacksonville, FL 32256 (US)
(72) Inventor: Duncan, Gregory Scott, Jacksonville, FL 32210 (US); Root, Allen, York, PA 17402 (US); Sanka, Ravi S., Jacksonville, FL 32256 (US); Wang, Daniel Tsu-Fang, Jacksonville, FL 32224 (US)
(74) Representative: Mercer, Christopher Paul

(56) References cited:
- US-A- 4 679 149
- US-A- 4 813 847
- US-A- 5 379 229
- US-A- 5 636 750
- US-A- 5 793 633

## Description

### Field of the Invention

The instant invention relates generally to an apparatus and method for material or article handling, and relates more specifically to an apparatus and method for article handling which provides the ability to selectively charge a plurality of products from a source and selectively discharge a plurality of products to a location via a control system responsive to changeable operating instructions.

### Description of Related Art

In the product storage and order processing/shipping field, there are three major methods, along with their accompanying apparatus, that are commonly recognized for introducing automation to the product picking/order assembly process. These are the pick-to-light, the A-frame and the horizontal channel picking/placing methods.

Each method requires as its initial step that a manufactured product be delivered and stored in bulk at a product storing and order fulfillment area, such as a warehouse. Typically, a number of bulk cases of a particular product are then placed together on a pallet. Separate pallets, each containing one type of product, are strategically located throughout the warehouse. Individual units of the product are then manually picked as needed from the cases. Types of products are picked in response to a plurality of customer orders. Due to the limited amount of space in any product storing and order fulfillment area, however, only a limited number of products can be placed near a picking device. It is at this point that the three methods mentioned above diverge.

With the pick-to-light method and apparatus, products are stored or placed at specific locations throughout a warehouse. A light illuminates at a location having a required product for a specific customer order. An employee must then manually remove or pick a desired amount of the product from the illuminated location. A second light will then illuminate at a second location for a second product required by the customer order. The process continues until the order is complete. A similar process is used to fill a next order. When a picking location for a product becomes depleted of its associated product, it must be manually replenished with additional cases of the product, located typically in racks situated behind the picking location.

One problem associated with this method and apparatus, is that it requires substantial handling and human intervention. This, in turn, requires substantial labor costs arising from wages for such employees, as well as costs resulting from both ergonomic injuries to employees and from the human error in the picking process.

In accordance with the A-frame method and apparatus, a product is stored in particular ones of a plurality of vertical channels associated with an order processing device. A belt section, or alternatively, a bin, on a conveyer is assigned to a specific customer order. The conveyor, with the belt section, passes underneath the plurality of vertical channels. Those channels containing a product called for by the customer order dispense the proper number of units of the product onto the belt section. The belt section, after receiving the product, passes under the next channel containing a next product called for by the product order. The process continues until the order is complete. A similar process is used to fill a next customer order.

When a vertical channel becomes depleted of a product, it is typically, as with the pick-to-light method and apparatus, manually replenished by employees from cases located behind the vertical channel. The same problem regarding substantial handling and human intervention is thus associated with the A-frame method and apparatus. In addition, the A-frame apparatus usually has large channels. Because of this, the A-frame apparatus is generally best suited for a high volume product which requires a low number of stocking units. Low volume products must be manually added to the belt sections prior to placement of products selected from the large vertical channels, which compounds the problem of labor costs. An additional problem arises in that because two systems of product dispensing are used, system maintenance costs are increased when using this method and apparatus.

In the horizontal channel placing/picking method and using the LMS AUTOPICKER apparatus, a product is stored in horizontal channels with a product being assigned to a pre-determined number of such channels. A belt section, or alternatively, a bin, on a conveyer is assigned to a specific customer order. The conveyor, with the belt section, passes underneath the plurality of horizontal channels. Those channels containing a product requested by the customer order dispense the proper number of units of the product onto the belt section. The belt section, after receiving the product, passes under the next channel containing a next product called for by the product order. The process then continues until the order is complete. A next order is processed in a similar manner.

When a horizontal channel becomes depleted of a product, it is typically, and as in the previous methods and apparatus, manually replenished by employees from cases located behind the horizontal channel. Thus, the same problem regarding substantial handling and human intervention is associated with the horizontal channel picking method and LMS AUTOPICKER apparatus. In addition, the LMS AUTOPICKER apparatus uses gravity to dispense a product from the horizontal channel. Because of this, the LMS AUTOPICKER apparatus experiences jamming when a lightweight product is used. An additional problem is that the horizontal channels generally require that a product fall a lengthy distance, thereby possibly causing the ordered products to be damaged.

A further problem, associated with all three methods and apparatus described above, is that the pallet storage, as well as the horizontal and vertical channel apparatus with accompanying conveyor transportation center requires an expansive amount of floor space for the product storing and order fulfillment area. Yet another problem associated with each of the foregoing methods and their accompanying apparatus is that they are not well suited for multi-item inventories comprising small cartons.

United States Patent 5,379,229 discloses an automated system for storing and retrieving objects from multiple object categories. A plurality of storage rack assemblies is included. Each storage rack assembly has a plurality of slots sized for storing objects. A storage transport is movable alongside each respective storage rack assembly for positioning adjacent any slot. A plurality of horizontal tracks are arranged to be perpendicular to the storage rack assemblies. Each storage rack assembly has an end adjacent the tracks. A runner transport is coupled to and movable on each track for receiving one of the objects from, or providing one of the objects to a storage transport. Two conveyor rack assemblies are located at opposite ends of the tracks, aligned perpendicularly to the track. Conveyor transports are adjacent the conveyor rack assemblies for transferring objects between the conveyor rack assembly and the runner transports. Storage and retrieval operation requests are generated by simultaneously providing positioning signals to a conveyor transport, a runner transport and a storage transport. Storage transports are selected in accordance with a predetermined transport selection function. Storage slots are selected in accordance with a predetermined slot selection function. A database stores the category, age and location of each of the objects.

United States Patent 5,793,633 discloses a storage management system for controlling product supply to and product delivery from a product depot station disposed between two processing stations on a product transportation line where receptacles are loaded with a plurality of kinds of products so as to maintain an appropriate size of stock of various kinds of products, and to deliver products of any specific kind in conformity with a request of delivery from the succeeding station.

Thus, there is a need for an automated product storage and order fulfilment apparatus and method which minimises or eliminates the forgoing problems.

### Summary of the Invention

In order to address the foregoing shortcomings in the prior art, the present invention provides an apparatus for handling products, comprising a computer processing system; two or more storage racks comprising a plurality of individually addressable storage locations for densely storing a plurality of products in a centralised area wherein at least one of said storage racks is capable of being moved in relation to at least one other storage rack, the positions of each of the storage racks are capable of being controlled by said computer processing system, and each of said storage locations is capable of being accessed by at lesat one product handling device; means for inputting identifying information for said plurality of products into said computer processing system; said at least one product handling device capable of being controlled by said computer processing system for placing at least one of the plurality of products into a storage location that is determined by said computer processing system just prior to placing said product; and memory in said computer processing system which stores the identifying information of said product and said storage location.

The present invention further provides methods for handling products as recited in claims 21 to 36.

Such methods and apparatus allow for dense storage of a plurality of products in a centralized area. Products may be continually placed in an apparatus of the instant invention, allowing for keeping the apparatus full of products with minimal additional labor. Thus, a nearly unlimited number of stocking units may be continually processed in a warehouse facility.

In addition, the methods and apparatus of the instant invention allow for products to be picked in accordance with a customer order. For example, if a customer requires a plurality of contact lens packages in a plurality of prescriptions, i.e., a plurality of product types, the present invention allows for the products to be automatically picked. The products within an order may be sorted prior to or after picking if desired, for example, according to either increasing or decreasing prescription sizes. Picked products may be sorted into orders after picking and then placing on the out-feed conveyor. Other product sorting methods may easily be accommodated. The picking and placing can occur simultaneously, intermittently, or as-needed.

### Brief Description of the Drawings

Further aspects of the instant invention will be more readily appreciated upon review of the detailed description of the preferred embodiments included below when taken in conjunction with the accompanying drawings, of which:
FIG. 1A is a front view of the apparatus in accordance with the present invention;
FIG 1B is a top view of the apparatus of FIG. 1A;
FIG. 2 is a schematic block diagram of the computer processing system of the apparatus in FIG. 1A; and
FIG. 3 is a diagram illustrating an exemplary database used to track products in accordance with the present invention.

### Detailed Description of the Preferred Embodiments

The "identification means" is a number, bar-code, two dimensional matrix, three dimensional matrix, inductive transmitting/receiving device, or radio frequency chip, or the like. Preferably each identification means contains some unique information for every part having one. Identification means may be machine readable and/or humain readable, preferably at least machine readable. A machine readable identification means preferably has information stored in a database associated with the identification means. For packaging, the information stored in the database associated with the identification means may not be present on the packaging in human-readable form. That is, the only way to know which product is in the packaging is to access the information in the database by inputting the identification means into the database, via a bar-code reader or the like. The preferred identification means is a bar-code, two dimensional matrix, or three dimensional matrix.

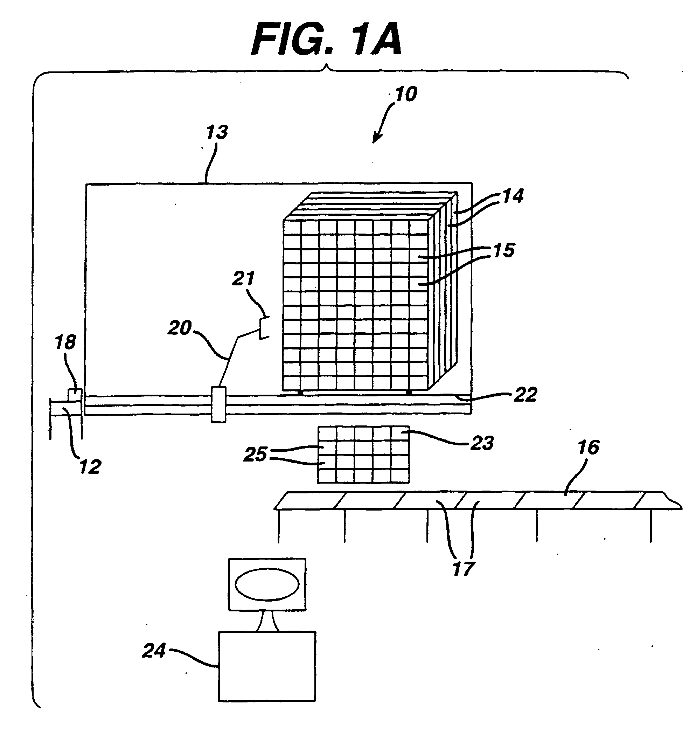

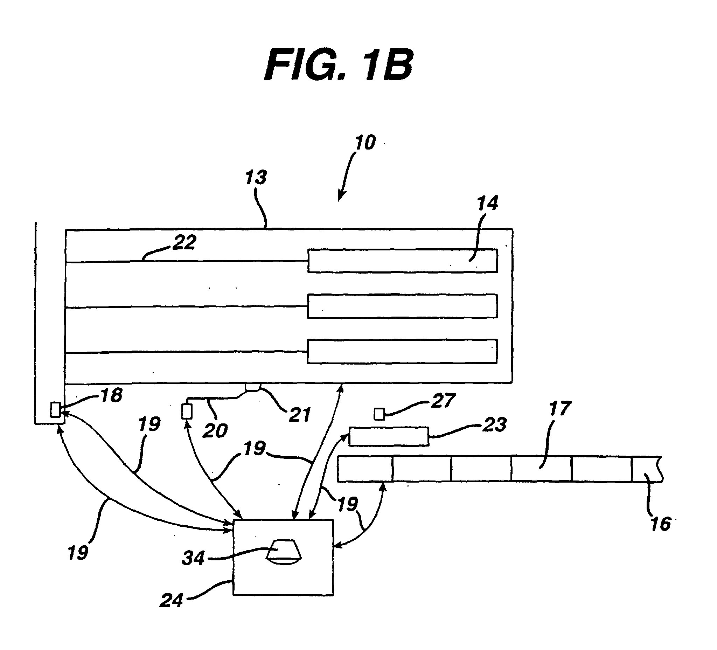

Referring now to FIGS. 1A through 3, wherein similar components are referenced in like manner, FIGS. 1A and 1B display a preferred apparatus for automated product storage and order fulfillment and accompanying methods for using the same. Apparatus 10 is referred to herein as the Vertical Stacking Grid (VSG). As shown, the VSG 10 includes an in-feed conveyor 12, racks 14, an out-feed conveyor 16, a reader 18, a robotic arm 20, rails 22, order staging areas 23, and a computer processing system (CPS) 24 which communicates with each of the foregoing via communication lines 19.

In-feed conveyor 12 may be an automated conveyor belt or the like which transports products to a location accessible to robotic arm 20. The in-feed conveyor 12 is accessible to employees for placing manufactured products thereon or is accessible to one or more automatic product depositing devices (not shown) for accomplishing the same. Furthermore, the in-feed conveyor 12 may be controlled by CPS 24.

Racks 14 each contain a plurality of storage locations or spaces 15 for storing individual product units, such as cartons or packages of a product. Each space 15 may be uniform in size or may be of varied dimensions so that a plurality of different product types, which may be of different sizes, may be accommodated. Alternatively, space 15 may instead be a hook, pocket, bracket, velcro strip, or any other implement for securing a product in a storage location. The racks 14 may be stationary or moveable along rails 22 so that each space 15 in the racks 14 is accessible to robotic arm 20. The racks 14 may be moveable in one, two or three dimensions. Furthermore, the racks 14 may be formed of any of a number of materials, such as, preferably, a lightweight material (for example, aluminum) which may be formed to have spaces 15 for storing products. Each space 15 is preferably individually addressable by CPS 24. In one embodiment, a space 15 may be assigned an address such as "051A," meaning rack 5, row 1, column A. Other addressing schemes may be successfully implemented. It is further contemplated that the racks 14 may optionally be enclosed by an enclosure 13, for example, a glass or plexiglass enclosure to protect the stored products from dust, humidity, light, or the like. One of ordinary skill in the art will appreciate that any number of racks may be used with VSG 10. Furthermore, although racks 14 are shown to be rectangular and in a vertical orientation, it will be appreciated by one of ordinary skill in the art that they may have any shape and may be arranged in any useful orientation so long as assignable storage locations are accessible to a picking and/or placing device, as described further hereinbelow.

Out-feed conveyor 16 includes a conveyor belt operative to transport groups of ordered products away from VSG 10. Out-feed conveyor 16 may include any number of belt sections 17, which may be individually assigned to a specific customer order and tracked by CPS 24. Each belt section 17 may have an identifying means which is preferably machine-readable, e.g. a bar code. Belt sections 17 may serve as a staging area for assembling ordered products in lieu of the plurality of staging areas 23, shown and described in more detail below. Conveyor 16 and/or belt sections 17 are further contemplated to be accessible to employees for removing assembled products from VSG 10 for shipping or the like. Alternatively, instead of belt sections 17, out-feed conveyor 16 may include individual bins or shipping boxes (not shown) which may be connected together or provided individually and which operate for the same purpose as belt sections 17. Out-feed conveyor 16 is, furthermore, optionally controllable by CPS 24.

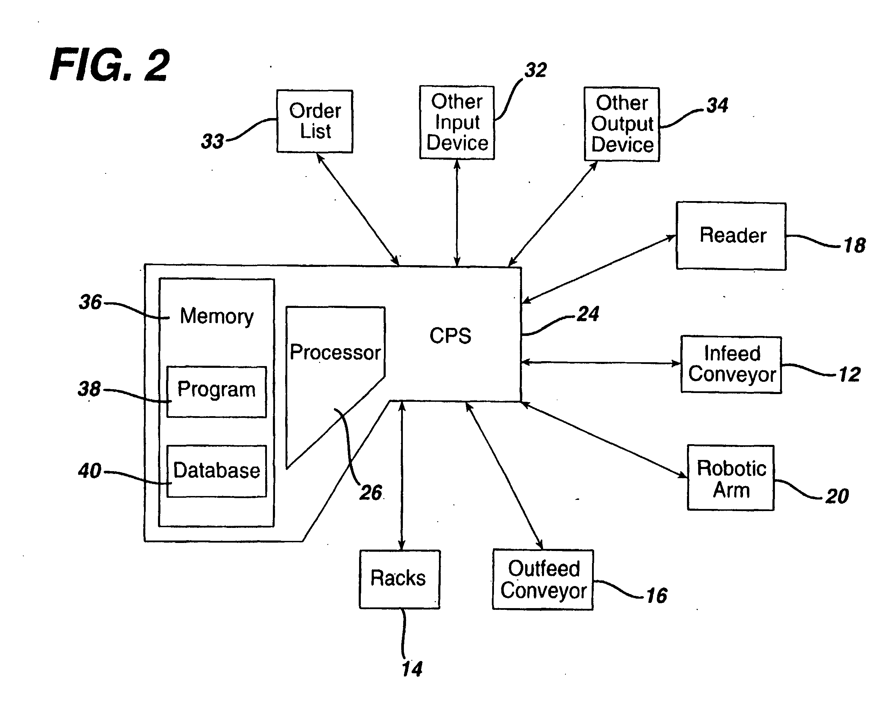

Reader 18 may be any type of scanner, such as an optical scanner coupled with optical character recognition software, which may be stored in reader 18 or in program 38 of CPS 24. Reader 18 may further be an infrared or magnetic scanner for reading compatible identification means on the products. In a preferred embodiment, reader 18 is a bar code scanner and the identification means is a bar code. Other useful readers will be apparent to one of ordinary skill in the art. The reader 18 reads the identification means from the product. Reader 18 is preferably operative to transmit the information in the identification means to CPS 24 in an intelligible format. It is further contemplated that product identification means or label information may be manually input to CPS 24, in which case reader 18 may be omitted. When product information is input into CPS 24, it is stored in the database 40 (Fig. 2). Reader 18 may further be used to automatically verify that the correct products were assembled after picking in response to a customer order prior to shipment of the assembled products by, for example, placing a second or multiple readers (not shown) near out-feed conveyor 16 so that the identification means on the picked products may be read and confirmed prior to placement of the product on the out-feed conveyor 16 or prior to shipping an order.

Robotic arm 20 may be any product handling device. Robotic arm 20 preferably includes one or more grippers 21 operative to hold and move product to be placed in and picked from rack 14 in response to a customer order. Robotic arm 20 is preferably motorized and may be moveable in one, two or three dimensions so that it may access any space 15 on the plurality of racks 14. Robotic arm 20 is, furthermore, controllable by CPS 24 to direct the removal of a product from in-feed conveyor 12, place the product in an addressable space 15 on a rack 14, pick a product from that or another space 15, optionally sort the picked product in a staging area 23 and/or transport the product to out-feed conveyor 16 and/or a belt section 17. Robotic arm 20 is further contemplated to be moveable along the entire enclosure 13. Placement and picking operations performed by robotic arm 20 are optionally controllable by a separate programmable logic controller (PLC) (not shown) which may cooperate with CPS 24. When a product is placed, the address of the storage location is stored in the database 40 with the corresponding product information. After a product is picked from a storage location, the availability of the storage location, which the product occupied, is noted by CPS 24.

In other embodiments, robotic arm 20 can pick and place a plurality (e.g. 2 to 10 or more) products at a time with a plurality of grippers 21. In addition, robotic arm 20 may be controlled to pick and place products on the fly (i.e. in an assembly-line fashion) optionally in conjunction with a single transport conveyor (not shown) which may take the place of the in-feed conveyor 12 and the out-feed conveyor 16. In this embodiment, the picked products may be sorted downstream of VSG 10 by operators or a separate apparatus (not shown).

Note that only one robotic arm is shown in FIGs. 1A and 1B; however, there can be any number of arms, for example 1 to 10 arms. Each robotic arm can perform the picking and placing tasks, or one or more arms can just pick and one or more robotic arms can just place. Alternatively, each rack could have one or more robotic arms, which pick and/or place on just that rack. Alternative embodiments would be evident to a person of ordinary skill in the art. The description of what robotic arm 20 does applies to multiple robotic arms.

Rails 22 preferably guide the racks 14 in a one-dimensional direction along the length of each rail 22. It is contemplated, however, that racks 14 may be moveable in more than one direction or dimension, in which case, rails 22 would be correspondingly adapted for such, or omitted altogether. If the racks are stationary, greater range of motion could be provided to the robotic arm 20.

One or more staging areas 23 are optionally included within VSG 10 for temporarily storing picked products while a particular customer order is being assembled, prior to transporting the assembled order to out-feed conveyor 16. The staging areas 23 can be like mini-racks, that is, they have storage locations called slots 25 which are preferably individually addressable so the products within the slots 25 or the availability of the slots can be tracked by a database. The database can be the same or different from the one that tracks the storage locations 15. The staging areas 23 may be constructed in a similar form and materials as the racks 14. In addition, it is contemplated that staging areas 23 may be replaced by a method wherein robotic arm 20 places products onto an out-feed conveyor 16 as the products are picked, and sorting of the products into individual orders takes place downstream by a separate apparatus (not shown).

In a preferred embodiment there are multiple staging areas 23 each having a plurality of individually addressable slots 25. In Fig. 1A, five staging areas are shown, each having four slots 25. CPS 24, which receives an input of an order list 33 for products (Fig. 2) from another computer processing system (not shown) may then assign in the same or different, preferably the same database which stores the storage locations 15 of the products, a customer order to one or more of the staging areas 23 and/or slots 25, and products may be placed into the slots by robotic arm 20 as the products are picked from racks 14. In this configuration, a plurality of orders may be picked simultaneously. The maximum number of orders that can be so handled may correspond directly to the total number slots 25 if each order consists of one product. Preferably only one order is assigned to each staging area 23, although multiple staging areas 23 may be assigned to one order. In this embodiment, the maximum number of orders that may be picked simultaneously corresponds to the number of staging areas 23, if each order has the same number or fewer products in each order than the number of slots per staging area 23. In the preferred embodiment, VSG has ten staging areas having four slots each; therefore, preferably a maximum of ten orders each having 4 or fewer products, can be picked simultaneously. For orders having more than four products, then multiple staging areas will be assigned to that order. For example an order for seven products will be assigned to two staging areas. For orders having more than forty products, all the staging areas will be assigned as available to four products in the order until the order is filled. As all the products in each order are assembled in the staging area(s), the product(s) in those staging area(s) are pushed by one or more pusher bar(s) 27, preferably there is one pusher bar for each staging area with fingers for each slot in the staging area, onto the conveyor belt preferably grouped together as sorted, (described in more detail below) and transported to packaging. Once one or more staging areas are empty, the next order or orders from the order list 33 are assigned to the now available staging area(s) 23. If needed multiple belt sections or groupings on the out-feed conveyor will be assigned to portions of the order.

Turning now to FIG. 2, CPS 24 is preferably configured to coordinate operation of in-feed conveyor 12, racks 14, out-feed conveyor 16, reader 18 and robotic arm 20, and receive the order list 33, and optionally receive other inputs from other input devices 32, and produce other outputs to other output devices 34.

CPS 24 may be any type of computer, PLC and the like. CPS 24 is operative to receive program instructions and user inputs, and is further operative to output results corresponding to such instructions and inputs, such as paper verifications of each customer order, in accordance with the present invention, and CPS 24 may generate signals for controlling any or all of in-feed conveyor 12, racks 14, out-feed conveyor 16, reader 18 and robotic arm 20. Alternatively CPS 24 may provide data to one or more PLC's (not shown) for accomplishing the same. CPS 24 includes a processor 26 which may be any commonly available microprocessor, such as the PENTIUM III manufactured by INTEL CORP, and memory 36 which stores program 38 and database 40.

Other input device 32 may be one or more commonly known devices used for communicating information to CPS 24 via either another computer processing system or by user inputs. Accordingly, other input device 32 may include a keyboard, a mouse, a graphics tablet, a scanner, a voice recognition unit, a parallel or serial communication port, a network connection and any appropriate network or other communication card for receiving data. Other input device 32 is operative to allow a user to input instructions and values in accordance with the present invention.

Other output device 34 may be one or more commonly known devices used by CPS 24 to communicate results of instructions and values to an employee. Accordingly, other output device 34 may include a display monitor, a voice synthesizer, a printer, a parallel or serial communication port, a network connection, any appropriate network, other communications apparatus for sending data, and the like.

Memory 36 may be an internal or external high capacity memory device for storing computer processing system data, the storage capacity of which is typically measured in megabytes or gigabytes. Memory 36 stores, inter alia, an operating system such as WINDOWS NT by MICROSOFT CORP, and one or more application programs 38. Accordingly, memory 36 may be one or more of the following: a floppy disk drive, a hard disk drive, a CD-ROM disk and reader/writer, a DVD disk and reader/writer, a ZIP disk and a ZIP drive of the type manufactured by IOMEGA CORP., and/or any other computer processing system readable medium that may be encoded with processing instructions in a read-only or read-write format. Further functions of and available devices for memory 36 will be apparent to one of ordinary skill in the art.

The memory 36 preferably comprises random-access memory (RAM) and read only memory (ROM). The RAM may be a suitable number of Single In-line Memory Module (SIMM) chips having a storage capacity (typically measured in kilobytes or megabytes) sufficient to store and transfer, inter alia, processing instructions utilized by processor 26 and received from program 38 during operation of CPS 24. The read-only memory (ROM) portion of memory 36 may be any permanent non-rewritable memory medium capable of storing and transferring, inter alia, processing instructions performed by processor 26 during a start-up routine of CPS 24. Further functions of memory 36 and available devices for memory 36 will be apparent to one of ordinary skill in the art. CPS 24 may comprise additional parts of a computer, e.g. clock. These parts are not described herein and are known to a person of ordinary skill in the art.

Program 38 includes a plurality of processing instructions which enables CPS 24 to receive input data and information in accordance with the present invention, e.g. product information. The program 38 may be written in any conventional computer processing system language that is comprehensible to CPS 24, such as C++ or VISUAL BASIC and may include a database 40, such as an SQL-based database program. Program 38 preferably includes processing instructions allowing CPS 24 to receive products, to place the products into VSG, to store the product information and the storage location for a product in a database, to accept customer orders in the order list 33 received through a communication port or other input device 32, and to pick products on the order list 33 from the storage locations 15. Preferably, the program 38 has processing instructions for sorting the products within each order by power, cylinder and axis (from highest to lowest for each). Further, preferably the program 38 has processing instructions for assigning the staging areas and the slots 25 in each staging area 23 to the orders and the products in each order. Preferably, the products in the orders are assigned slots 25 in the staging areas 23 in sequence after the orders products in the order are sorted by power, cylinder and axis to maintain the picked products within the orders in the sorted sequence.

In addition, program 38 preferably includes processing instructions allowing CPS 24 to determine a placement priority of incoming products, and determine appropriate locations 15 in racks 14 for placing each product, based on their priority and available storage locations 15. In particular, a higher priority product will be placed in a more easily or more readily accessible storage location 15 in the racks 14. Priority may be determined based on any number of factors or combinations thereof including: an expiration date of the product, a demand or projected demand for the product and the type of product, including an SKU or serial number associated with the product. For example, the highest priority type(s) of product(s) based on highest sales is (are) assigned a storage location in the first rack, and the lowest priority type(s) of product(s) based on the lowest sales is (are) assigned a storage location in the last rack. For the embodiment shown in FIG. 2, the first rack would be closest to the robotic arm 20 and the last rack is furthest from the robotic arm 20; therefore, the highest priority products would be stored in the rack closest to the robotic arm. The storage location 15 is determined in real time, that is, the storage location is determined for a product after the scanner 18 reads the identification means of the product and just before the product is placed in a storage location. If there are no available spaces in the rack or part of the rack which is to hold product of that priority, the product will be assigned to an available storage location for products of the next priority.

In an alternative embodiment, the program 38 will not determine a priority for the products and instead products can be assigned a storage location based on the availability of storage locations in the rack most convenient to the robotic arm 20.

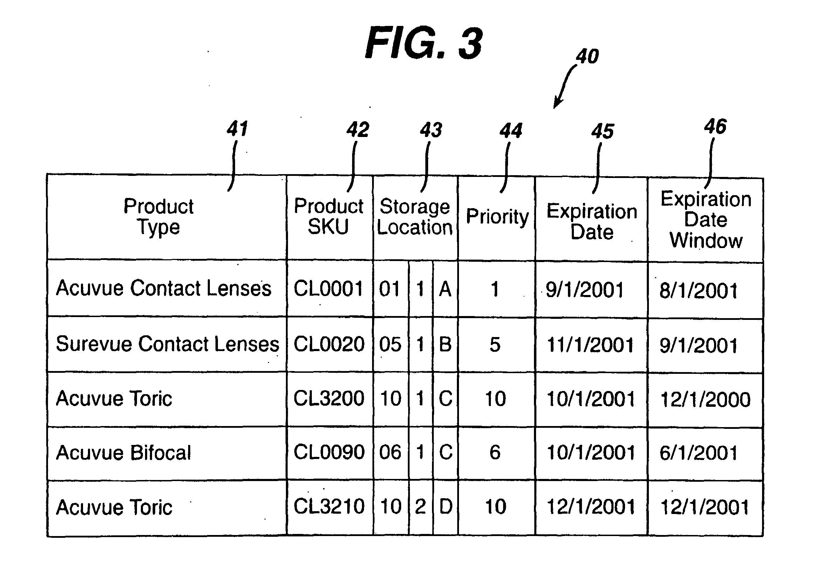

In a preferred embodiment, the program 38 provides that during peak operating hours picking is accomplished by selecting an ordered product in the order list 33 which is in a closest storage location 15 to robotic arm 20 at the time a customer order is processed. That is, program 38 may be operative to pick products according to current accessibility. In particular, CPS 24 may determine which rack 14 is most accessible to robotic arm 20 at any given time, and products meeting the customer order will be selected from that rack first. Alternative picking schemes may be performed by CPS 24, during off-peak hours. That is, program 38 may be operative to pick products based on a first-in-first-out picking scheme implemented during non-peak operating hours. In accordance with this second picking scheme, a date and time that each product was received by VGS 10 is stored in a field (not shown) of database 40 shown in Fig. 3 and products to be picked in response to a customer order are selected in order of when they were received by VSG 10. In an alternative embodiment, the most conveniently located products to the robotic arm are picked, except that this is overridden when products are close to their expiration date or within their expiration date window, which will be explained below.

Program 38 updates the order list and the database 40 when products are picked and/or orders are satisfied. Optionally, program 38 preferably includes processing instructions allowing CPS 24 to generate reports confirming that particular customer orders have been satisfied. These reports may be used by employees to visually verify each order assembled by VSG 10 prior to transporting the order via out-feed conveyor 16 or prior to to shipping the assembled orders to the customer/recipient. Program 38 may further generate inventory reconciliations, the use of which is well known to one of ordinary skill in the art.

FIG. 3 illustrates exemplary fields which may be included in a database 40 used by CPS 24 to track products stored in VSG 10. The database 40 may include product type field 41, product SKU field 42, storage location field 43, priority field 44, expiration date field 45, and expiration date window field 46, each described in more detail below. Records stored in database 40 are automatically or manually updated upon receipt or removal of a product by VSG 10. Each record or row of database 40 preferably corresponds to one individual product unit. Additional or fewer fields may be used successfully with the present invention and many equivalent configurations of the data fields of database 40 exist as will be apparent to one of ordinary skill in the art.

Product type field 41 optionally contains a human-comprehensible description of each product stored in VSG 10. Product SKU field 42 preferably contains a product serial number or the like read by reader 18 and transmitted to CPS 24 for each product stored in VSG 10. Storage location field 43 contains the address for a storage location 15 in which a particular product is stored, as determined, for example, by CPS 24, e.g. rack, row, column. Optional priority field 44 stores the assigned priority for the product as determined by CPS 24. Optional expiration date field 45 stores the expiration date for each product stored in VSG 10. In addition preferably there is an expiration date window field 46 which is determined in accordance with processing instructions in program 38 for each product based on the product's expiration date and demand for the product. The expiration date window stored in field 46 is a date before the actual expiration date of the product at and after which the program will instruct the robotic arm 20 to pick that product if ordered (instead of a more conveniently located product). Different products have different expiration date windows depending upon expected demand for the product. If demand for the product is high the expiration date window will be closer to the expiration date, e.g. 4 weeks before the expiration date. If demand for a product is low, then the expiration date window may be 6 months to a year before the expiration date of the product, to increase the chance that a product is picked in response to a customer order before the product actually expires.

The information stored in field 42 is preferably transmitted to CPS 24 by reader 18 after being read from the identification means on the product label. The information in fields 43, 44 and 46 is preferably determined by program 38, as described above. Alternatively, information for any or all fields may be manually inputted via the input device 32. Additional information such as power, cylinder and axis information for contact lens product can be stored in database table 40 or in an alternative table (not shown) which is keyed to one or more of the fields shown in database 40. Preferably there is a production database having the power, cylinder, axis expiration date 45 and product type 41 keyed to the product SKU 42 of database 40. The product type 41 or other information can be copied from the production database into database 40 after the product SKU is read from the identification means on the product label.

A description of the operation of a first exemplary embodiment of VGS 10 will now be provided. In this embodiment, a warehousing or manufacturing facility receives or produces a plurality of different types of products, such as boxes of contact lenses of various sizes and prescriptions. These products are placed onto an in-feed conveyor 12 by manual or automatic means. Each of the plurality of products bears an identification means (preferably a bar code) which may contain an SKU or other product identifier. The in-feed conveyor 12 transports each of the products from its initial location to a reader 18. Reader 18 is preferably two bar code scanners which are controlled by CPS 24 to each read the identification means on a product, so that multiple products, in this case two products, may be scanned simultaneously. Each of the two bar code scanners transmits the scanned information to CPS 24 for storage in database 40. Each of the products waits under a scanner until picked up by robotic arm 20. When one or both of the products are picked up by the robotic arm 20 for placement into the rack 14, one or two products move into position under the scanner(s), and is (are) read. Presently, the robotic arm 20 moves one product at a time.

Program 38 of CPS 24 determines a priority for each received product prior to lifting it from the in-feed conveyor 12. The priority of each product of the product types may be classified on a scale of, e.g. 1 to 10, each number in the scale representing the rack in which the product type or types will be placed. Presently there are ten racks in the preferred embodiment. The priority of each product is preferably determined by a demand associated with each of the product types, based on historical sales data for each product. Referring to FIG. 3, for example, a first product with SKU number CL0001 corresponds to a package of contact lenses of a first power, cylinder, and axis which is in the greatest demand. Accordingly, the first product will then receive the highest priority, for example, priority 1. The product having the next highest demand will be assigned priority 2, and so on. Alternatively, when one hundred different types of products are stored in the VSG 10, the top ten demanded products may each be assigned priority 1. The next ten products in decreasing order of demand will be assigned priority 2, and so on. Alternatively, for 1,000 types of products, the ten highest in demand may be assigned a priority of 1, the next 30 types of products in terms of demand assigned a priority of 2, the next 100 types of products in demand assigned a priority of 3, etc. and the lowest priority may be assigned to 500 types of products. It should be apparent to one of ordinary skill in the art that priority field 44 of database 40 may be omitted and that products may be sorted by their SKU's which may each be directly associated with a particular historical demand level. Further, the priority numbers in the scale do not have to match the number of racks, because product(s) having more than one priority may be assigned to a single rack, or product(s) having one priority may be assigned to more than one rack.

After the product has been scanned, the product information has been stored, and the priority determined, CPS 24 determines an appropriate storage location 15 for the product. The storage location 15 is preferably selected based on the priority level determined for that product, which may be based upon a demand for that product as previously stated. Selection is also based on availability. If a rack has no available storage locations, then the program 38 will assign the product to the next closest available storage location. Thus, products having the highest priority may be stored in the first rack of VSG 10, unless the first rack is full, in which case the product will be assigned a storage location in the second rack. Products having the next highest demand may be stored in the second rack, and so on. Products are preferably assigned to the storage locations 15 in real time, or there may be a delay between the time of receipt of the product and its assignment to a storage location 15. It should be apparent to one of ordinary skill in the art that the ratio of the types of products to storage locations need not be one-to-one. The ratio of types of products to storage locations can vary as desired. This invention is particularly beneficial when there are many types of products to be stored in a minimum area. The ratio of types of products to storage locations in the apparatus can be larger than 1 to 1, even larger than 2 to 1, or 3 to 1, and theoretically there is no limit.

Alternatively, the products may be placed in accordance with received customer orders. For example, a customer order may call for twenty packages of a first product type and twenty packages of a second product type. CPS 24 may then direct robotic arm 20 to place the first twenty packages of the first and second product types as they are received from in-feed conveyor 12 into spaces of the rack 14 which are most conveniently located to the robotic arm 20.

Further, it should be apparent that the process of determining a priority may be skipped and each product may be placed in the closest available storage location in the rack that the VSG is picking from or placing in. For example, the products on the in-feed conveyor can be placed in a first rack until there are no more available storage locations and then the racks and/or the robotic arm may move to a second rack from which product is to be picked; the robotic arm may pick all the products for the orders that the VSG is filling from the second rack, and then place all the products from the in-feed conveyor until there are no more available storage locations in the second rack, or no more product is waiting on the in-feed conveyor 12 to be placed, and then move to a third rack which may be the same or different from the first rack, to pick the next product(s) from the order list for the orders which are being filled, and then place products from the in-feed conveyor, and so on. Other placing schemes may be implemented as will be apparent to one of ordinary skill in the art.

Picking of the products preferably occurs in accordance with individual orders which are received by a separate order processing system and communicated to CPS 24, preferably from a central customer order machine servor (not shown). Customer orders can be received by phone, mail, internet, facsimile, or by any method. Some order taking procedures are disclosed in US Patent 4,958,280, others are known in the art. Preferably, the orders are organized into a data-base and communicated to CPS 24 as order list 33. Preferably, the orders are sorted by program 38 as described above. In the embodiment having one or more staging areas 23, depending upon the number of staging areas 23 and/or slots 25 available, the CPS 24 will assign particular orders from the order list 33 to the available staging areas 23 and/or slots. An order will be temporarily skipped if a product which is part of that order is not in any storage location 15 in VSG 10. In this embodiment all orders or parts of orders that have been assigned to staging areas 23 are preferably on a working order list, which can be a separate database (not shown) stored in CPS 24. During operation of VSG 10, orders will continuously be moved onto the working order list from the order list 33, and off the working order list when the products have been picked and placed onto the out-feed conveyor 16. The working order list can have fields which track the products stored in the staging areas, if present. Products are not removed from the working order list until the products in an entire order are pushed from the one or more staging areas onto the out-feed conveyor 16. In embodiments without a staging area, the working order list is just a discrete number of products off the top of the order list to be picked by robotic arm 20. In this embodiment, the working order list is updated as the products are picked and placed on the out-feed conveyor 16.

After assigning the products to a staging area 23, CPS 24 will direct the robotic arm 20 to pick the next ordered product on the working order list, which may require the movement of one or more racks 14 to a rack at which the robotic arm 20 will pick and/or place product referred to as the working rack. Once the product is picked it is transported to its assigned staging area 23, and placed in the assigned slot 25 for that product. If there are additional products on the working order list to be picked from the working rack, then the robotic arm 20 will pick all the products from the working rack and place all the products into the assigned slot(s) 25 in the staging area 23. Once all the products in the working order list have been pulled from the working rack, the CPS 24 checks the products under the scanner(s) 18 on the in-feed conveyor 12 for product that should be placed in the working rack. If the product is to be placed in the working rack, a storage location is assigned by CPS 24, the product is lifted by the robotic arm from the conveyor 12 and placed into storage location 15 in the working rack. The product information and storage locations are saved in database 40 after one or more products are removed from underneath the scanners 18, products on in-feed conveyor 12 move underneath the scanners 18, and are read by the scanners 18. The process of placing products into storage locations in the working rack continues until either both products underneath the scanners do not belong on the working rack in accordance with their assigned priorities, or the rack has no more available storage locations or there are no more products on the in-feed conveyor. Once no more products can be placed in the working rack, (and there are no products to pick on the working order from the working rack) the working rack changes to a different rack which has at least one product in the working order list to be picked from that rack. (The program may change to a rack which has the most products on the working order list present on that rack or it may pick products in the order that they appear in the working order list, or some combination of the these methods, or another method.) Again, the robotic arm 20 picks products present on the working rack according to the working list and then the products, if any, on the conveyor under the scanners that belong on the working rack are placed, then the working rack is changed to pick the next product or products on the working order list. At anytime during picking orders, if an individual order is fully picked, or all the slots 25 in staging area 23 are filled, the filled order or orders are assigned to one or more belt sections, the identification means of the belt section is read and stored with the order information in a database and the order is pushed by a push-bar 27 into the belt section. Preferably, the order is pushed so that the products are maintained in their sorted order. Therefore, for example if an order consists of 8 different products, the order will be assigned to two staging areas 23. The first four products will be assigned to one staging area 23 which may be the seventh staging area from the left, and the next 4 products may be assigned to the third staging area from the left. (The staging areas are assigned to the products on the working order list (or order list) in the sequence in which the staging areas became available.) When all 8 products have been placed in the third and seventh staging areas as assigned, the products in the seventh stage are pushed into the belt section first and the products in third staging area are pushed into the same belt section behind the other products so that the proper order of the power, cyclinder and axis of all the products in the order will be maintained. The out-feed conveyor 16 transports them to another location in the manufacturing facility or Warehouse. Having the products in sorted order, will make it much easier to quality check the order before the order is placed in a mailer and shipped to the proper recipient of the order, or to locate products which require additional processing, such as the addition of customized graphics to the product as disclosed in European patent application Filed on 31st January, 2001, claiming priority from USSN 09/494 859.

Once the products from one or more staging areas have been pushed onto the out-feed conveyor, the next products from the order list 33 are moved onto the working order list, assigned to slots in the staging area and the process continues.

Alternatively, as mentioned earlier, the staging area can be removed from VSG 10 and the program 38 of CPS 24 may direct the robotic arm 20 to pick the products from the working order list (or order list) and place them on the out-feed conveyor 16 as they are picked. Preferably in this embodiment sixty products from the order list are maintained on the working order list. According to program 38, the CPS 24 sorts the products on the working order list to determine preferably the most conveniently located storage locations for instructing the robotic arm to pick the products. CPS 24 preferably re-sorts the working order list anytime it changes, the working rack changes, products are placed, etc. so that the robotic arms operates at maximum efficiency. Similar to what was described above, in this embodiment without staging areas, the robotic arm 20 picks all the products on the working order list which are present on the working rack, places products from the in-feed conveyor 12 on the working rack (preferably based on an assigned priority), picks and/or places on a different working rack, and continues picking and placing as long as there are products to be picked and/or there are products to be placed. The program may provide that the robotic arm can pick directly from the in-feed conveyor if a product on the working order list is present on the in-feed conveyor, or it may instruct the robotic arm to place the product(s) onto the working rack and then pick (and place) again from the working rack if a product that was just placed is on the working order list before changing to a different working rack. As products are picked, the working order list is updated. Preferably, the program 38 reaccesses the most convenient locations to pick and place products depending upon the constantly changing working order list and storage location availabilities. In this embodiment, since the products are not sorted into orders as they are picked, a separate order sorter is used. The picked products are transported to the order sorter by the out-feed conveyor 16 or the like. The order sorter provides separate staging areas for assembling the picked products into orders. The picked products can either be sorted mechanically, or by operators.

It is contemplated that the just-described order of picking and placing will need to be modified, in that it may occur simultaneously if more than robotic arm is used. Presently, VSG 10 is envisioned to include at least two moveable racks 14 and may be expandable to include ten or more racks. Any number of racks 14 may be included. Each such rack 14 preferably has a capacity of 1492 spaces to store cartons of small items, yielding a total of 14,920 cartons for a ten rack device. The device is to be used to store greater than ten thousand different types of products. Testing indicates that a device of this capacity would be operable to store several days of inventory, based on average demand, of, for example, particular prescriptions and sizes of contact lenses or other product types kept in similarly-sized cartons.

In additional embodiments, it is contemplated that CPS 24 may be one or more computers, PLC's or combinations thereof, which cooperate in the control and operation of VSG 10. It is further contemplated that a plurality of VSG's 10 may be located in a single warehouse and may be commonly controlled by a single CPS 24. When such a plurality of VSG's 10 are cooperatively operated, it will be appreciated that any of the priority picking and placing schemes disclosed above may be adapted to account for products in each of the VSG's when fulfilling customer orders.

Finally, it is contemplated that an employee may be required to supervise or troubleshoot the operation of VSG 10, which is otherwise an automated apparatus. Methods of supervision and troubleshooting will be apparent to one of ordinary skill in the art.

Although the invention has been described in detail in the foregoing embodiments, it is to be understood that they have been provided for purposes of illustration only and that other variations both in form and detail can be made thereupon by those skilled in the art without departing from the scope of the invention, which is defined solely by the appended claims.

## Claims

1. An apparatus (10) for handling products, comprising:
a computer processing system (24);
two or more storage racks (14) comprising a plurality of individually addressable storage locations (15) for densely storing a plurality of products in a centralised area wherein at least one of said storage racks (14) is capable of being moved in relation to at least one other storage rack (14), the positions of each of the storage racks (14) are controlled by said computer processing system (24), and each of said storage locations is capable of being accessed by at least one product handling device (20),
means (18) for inputting identifying information for said plurality of products into said computer processing system (24);
said at least one product handling device (20) controlled by said computer processing system (24) for placing at least one of the plurality of products into a storage location that is determined by said computer processing system (24) just prior to placing said product; and
memory (36) in said computer processing system (24) which stores the identifying information of said product and said storage location (15).

2. The apparatus of claim 1, wherein said computer processing system (24) is capable of determining said storage location based on an assigned priority.

3. The apparatus of claim 1, wherein said computer processing system (24) is capable of determining said storage location based on the closeness of an available storage location (15) relative to said product handling device (20).

4. The apparatus of claim 1, further comprising an in-feed conveyor (12) for transporting the plurality of products to the product handling device (20).

5. The apparatus of claim 1, wherein said means for inputting is a reader (18) for reading an identification means associated with said at least one product.

6. The apparatus of claim 2, wherein said means for inputting is a reader (18) for reading an identification means which provides said identifying information for said product to said computer processing system (24) which is used by said computer to determine said assigned priority for said product.

7. The apparatus of claim 6, wherein said reader (18) is a bar code scanner and said identification means is a bar code.

8. The apparatus of claim 1, wherein said memory of said computer processing system (24) is capable of storing an expiration date window of the product determined by said computer processing system (24).

9. The apparatus of claim 2, wherein the assigned priority is based on at least one of: a demand, a projected demand, a type, and an expiration date of a product.

10. The apparatus of claim 1, further comprising one or more rails (22), wherein said at least one moveable storage rack (14) is moveable along said one or more rails (22) in at least one direction.

11. The apparatus of claim 1, wherein said at least one product handling device (20) picks specified products from storage locations (15) for said specified products.

12. The apparatus of claim 11, further comprising an out-feed conveyor (16) for transporting said picked product from the product handling device (20).

13. The apparatus of claim 11, wherein said at least one product handling device (20) for placing and said at least one product handling device (20) for picking is the same product handling device.

14. The apparatus of claim 13, wherein said at least one product handling device (20) intermittently places and picks said products.

15. The apparatus of claim 11, further comprising at least one staging area (23) for gathering said picked products.

16. The apparatus of claim 14, wherein said at least one product handling device (20) is capable of picking said products according to customer orders.

17. The apparatus of claim 15, wherein said at least one product handling device (20) is capable of picking said products according to customer orders, after said customer orders are sorted and each of said products is assigned to a location in said staging area (23).

18. The apparatus of claim 11, wherein the ratio of types of products to storage locations (15) is greater than one to one.

19. The apparatus of claim 16, wherein the computer processing system (24) is further capable of :
receiving a customer order via a communication port, said order having a selection of one or more products; and
directing said product handling device (20) to pick said selection of products from the plurality of products in said storage locations (15).

20. The apparatus of claim 1, further comprising:
at least one conveyor (12,16) for transporting the plurality of products to and from said product handling devices (20).

21. A method, performed by a computer processing system (24), for handling products, comprising the steps of:
inputting product identifying information for a product into a database (40) in said computer processing system (24), each product type having differing product identifying information;
selecting a storage location (15) for the product, wherein said storage location (15) is capable of being accessed by at least one product handling device (20) and is selected from a plurality of individually addressable storage locations (15) disposed among a plurality of storage racks (14), and at least one of said storage racks (14) is capable of being moved in relation to at least one other storage rack (14);
controlling the positions of each of the storage racks (14);
directing said at least one product handling device (20) to place said product into said storage location (15);
and storing in said database (40) associated with said product identifying information for a record for said storage location (15).

22. The method of claim 21, wherein before said selecting step is the step of determining a priority of the product, and further wherein said selecting step is based on said priority.

23. The method of claim 22, wherein the priority is determined based on at least one of:
a demand, a projected demand, a product type and an expiration date corresponding to the product

24. The method of claim 21 wherein said selecting step is based on closeness of an available storage location (15) to said handling device (20).

25. The method of claim 21, further comprising: the steps of
receiving customer order information; and
directing said product handling device (20) to pick product from one of said storage location (15) to fulfill said customer order.

26. The method of claim (25), wherein said directing step either picks the product from the storage location (15) most convenient to the product handling device (20) or picks the product based on an expiration date of the product

27. The method of claim 21 further comprising the steps of:
receiving a product from an in-feed conveyor (12) prior to said inputting step wherein said inputting step occurs by scanning an identification means corresponding to said product.

28. The method of claim 21, further comprising:
receiving one or more customer orders including a plurality of product types, said product types being present in a plurality of storage locations (15);
retrieving from said database (40) a plurality of records for said storage location (15) corresponding to said plurality of ordered product types stored by the computer-controlled apparatus; and
picking said products from said storage locations (15).

29. The method of claim 28, wherein said picking step is performed by directing the product handling device (20) to place the product on an out-feed conveyer (16).

30. The method of claim 29, wherein the step of directing said product handling device (20)
to place the product on an output conveyor (16) includes an additional step of directing said product handling device (20) to place the product in an order staging area (23) witlh the plurality of product types in said customer order.

31. The method of claim 28, wherein the picking step comprises selecting the product based on one of: a time the product was received or the location of the product

32. The method of claim 22, wherein the step of determining a priority of the product includes determining the priority based on at least one of:
a demand of the product, a projected demand of the product, a product type, and an expiration date of the product.

33. A method performed by a computer processing system (24) for handling products, comprising the steps of:
placing a plurality of product types in storage locations (15) located on various racks (14);
receiving a plurality of orders for a selection of product types;
working with a limited number of orders or products for picking product types;
picking first ordered product types using a product handler (20), said first ordered product types are located on a first working rack (14), said first working rack (14) being adjacent to a product handler (20);
depositing said picked product from said first working rack (14) onto an out-feed conveyor (16);
placing product from an in-feed conveyor (12) into storage locations (15) on said first working rack (14) until either there is no more product on said in-feed conveyor (12), there are no more open storage locations (15) on said first working rack (14), or the product on the in-feed conveyor (12) is not to be placed on said first working rack (14);
moving said first working rack (14) and said product handler (20) for picking additional product types to a second working rack (14);
picking second ordered product types using a product handler (20) said second ordered product types are located on a second working rack (14), said second working rack (14) being adjacent to a product handler (20);
depositing said picked product from said second working rack (14) onto an out-feed conveyor (16); and
placing product from an in-feed conveyor (12) into storage locations (15) on said second working rack (14) until either there is no more product on said in-feed conveyor (12), there are no more open storage locations (15) on said second working rack (14), or the product on the in-feed conveyor (12) is not to be placed on said second working rack (14).

34. The method of claim 33, wherein said depositing step includes the additional step of directing said product handling device (20) to place said product in an order staging area (23) prior to depositing said products onto said out-feed conveyor (16) after said products in a customer order have been accumulated in said staging area (23).

35. The method of claim 33, wherein said picking and placing steps occur simultaneously.

36. The method of claim 33, wherein said moving, picking, depositing and placing steps are repeated for third ordered product types located on a third working rack (14), which can be the same or different from said first working rack (14).

## Patentansprüche

1. Vorrichtung (10) zur Handhabung von Produkten, umfassend:
ein Computerverarbeitungssystem (24);
zwei oder mehr Lagerregale (14), die eine Vielzahl von individuell adressierbaren Lagerplätzen (15) zum dichten Lagern einer Vielzahl von Produkten in einem zentralisierten Bereich umfaßt, wobei zumindest eines der Lagerregale (14) dazu geeignet ist, in Bezug auf zumindest eines der anderen Lagerregale (14) bewegt zu werden, wobei die Positionen jedes der Lagerregale (14) mittels des Computerverarbeitungssystems (24) gesteuert werden und jeder der Lagerplätze dazu geeignet ist, dass auf diesen durch zumindest eine Produkthandhabungseinrichtung (20) zugegriffen wird;
Mittel (18) zur Eingabe von Identifizierungsinformationen für die Vielzahl von Produkten in das Computerverarbeitungssystem (24);
wobei die zumindest eine Produkthandhabungseinrichtung (20) durch das Computerverarbeitungssystem (24) zur Plazierung von zumindest einem der Vielzahl von Produkten in einem Lagerplatz, der durch das Computerverarbeitungssystem (24) gerade vor der Plazierung dieses Produktes bestimmt wird, gesteuert wird; und
einen Speicher (36) in dem Computerverarbeitungssystem (24), welcher die Identifizierungsinformationen des Produktes und des Lagerplatzes (15) speichert.

2. Vorrichtung nach Anspruch 1, **dadurch gekennzeichnet, daß**
das Computerverarbeitungssystem (24) zur Bestimmung des Lagerplatzes basierend auf einer zugeordneten Priorität geeignet ist.

3. Vorrichtung nach Anspruch 1, **dadurch gekennzeichnet, daß**
das Computerverarbeitungssystem (24) zur Bestimmung des Lagerplatzes basierend auf der Nähe eines verfügbaren Lagerplatzes (15) relativ zu der Produkthandhabungseinrichtung (20) geeignet ist.

4. Vorrichtung nach Anspruch 1, **dadurch gekennzeichnet, daß**
die Vorrichtung ferner ein Zustellungsfördermittel (12) zum Transport der Vielzahl von Produkten zu der Produkthandhabungseinrichtung (20) umfaßt.

5. Vorrichtung nach Anspruch 1, **dadurch gekennzeichnet, daß**
es sich bei dem Mittel zur Eingabe um eine Leseeinrichtung (18) zum Lesen eines Identifikationsmittels, das dem zumindest einen Produkt zugeordnet ist, handelt.

6. Vorrichtung nach Anspruch 2, **dadurch gekennzeichnet, daß**
es sich bei dem Mittel zur Eingabe um eine Leseeinrichtung (18) zum Lesen eines Identifikationsmittels handelt, welches die Identifizierungsinformation für das Produkt, die durch den Computer genutzt wird, um die zugeordnete Priorität für das Produkt zu bestimmen, dem Computerverarbeitungssystem (24) zur Verfügung stellt.

7. Vorrichtung nach Anspruch 6, **dadurch gekennzeichnet, daß**
es sich bei der Leseeinrichtung (18) um ein Strichcode- Einlesegerät handelt und es sich bei dem Identifikationsmittel um einen Strichcode handelt.

8. Vorrichtung nach Anspruch 1, **dadurch gekennzeichnet, daß**
der Speicher des Computerverarbeitungssystems (24) zur Speicherung eines Ablaufdatumsfensters des Produktes, das durch das Computerverarbeitungssystem (24) bestimmt wird, geeignet ist.

9. Vorrichtung nach Anspruch 2, **dadurch gekennzeichnet, daß**
die zugeordnete Priorität auf zumindest einer der folgenden Größen basiert: einem Bedarf, einem hochgerechneten Bedarf, einem Typ und einem Ablaufdatum eines Produktes.

10. Vorrichtung nach Anspruch 1, **dadurch gekennzeichnet, daß**
die Vorrichtung ferner eine oder mehrere Schienen (22) umfaßt, wobei das zumindest eine bewegbare Lagerregal (14) entlang dieser einen oder mehreren Schienen (22) in zumindest eine Richtung bewegbar ist.

11. Vorrichtung nach Anspruch 1, **dadurch gekennzeichnet, daß**
die zumindest eine Produkthandhabungseinrichtung (20) vorgegebene Produkte aus den Lagerplätzen (15) für die vorgegebenen Produkte entnimmt.

12. Vorrichtung nach Anspruch 11, **dadurch gekennzeichnet, daß**
die Vorrichtung ferner ein Auslauffördermittel (16) zum Transport des entnommenen Produktes, von der Produkthandhabungseinrichtung (20) weg, umfaßt.

13. Vorrichtung nach Anspruch 11, **dadurch gekennzeichnet, daß**
es sich bei der zumindest einen Produkthandhabungseinrichtung (20) zur Plazierung und der zumindest einen Produkthandhabungseinrichtung (20) zur Entnahme um die gleiche Produkthandhabungseinrichtung handelt.

14. Vorrichtung nach Anspruch 13, **dadurch gekennzeichnet, daß**
die zumindest eine Produkthandhabungseinrichtung (20) intermittierend die Produkte plaziert und entnimmt.

15. Vorrichtung nach Anspruch 11, **dadurch gekennzeichnet, daß**
die Vorrichtung ferner zumindest einen Zwischenspeicherbereich (23) zum Sammeln der entnommen Produkte umfaßt.

16. Vorrichtung nach Anspruch 14, **dadurch gekennzeichnet, daß**
die zumindest eine Produkthandhabungseinrichtung (20) zur Entnahme der Produkte in Übereinstimmung mit Kundenbestellungen geeignet ist.

17. Vorrichtung nach Anspruch 15, **dadurch gekennzeichnet, daß**
die zumindest eine Produkthandhabungseinrichtung (20) zur Entnahme der Produkte in Übereinstimmung mit Kundenbestellungen, nachdem die Kundenbestellungen sortiert wurden und jedes der Produkte einem Platz in dem Zwischenspeicherbereich (23) zugeordnet wurde, geeignet ist.

18. Vorrichtung nach Anspruch 11, **dadurch gekennzeichnet, daß**
das Verhältnis von Typen von Produkten und Lagerplätzen (15) größer als 1: 1 ist.

19. Vorrichtung nach Anspruch 16, **dadurch gekennzeichnet, daß**
das Computerverarbeitungssystem (24) ferner
zum Empfang
einer Kundenbestellung mittels einer Kommunikationsschnittstelle, wobei die Bestellung eine Auswahl von einem Produkt oder mehreren Produkten aufweist; und
zur Lenkung der Produkthandhabungseinrichtung (20), so daß die Auswahl von Produkten aus der Vielzahl von Produkten in den Lagerplätzen (15) entnommen wird, geeignet ist.

20. Vorrichtung nach Anspruch 1, **dadurch gekennzeichnet, daß**
die Vorrichtung ferner umfaßt:
zumindest ein Fördermittel (12,16) zum Transport der Vielzahl von Produkten zu und von der Produkthandhabungseinrichtung (20) weg.

21. Verfahren, das durch ein Computerverarbeitungssystem (24) ausgeführt wird, zur Handhabung von Produkten, umfassend die Schritte:
Eingabe einer Produktidentifizierungsinformation für ein Produkt in eine Datenbank (40) in dem Computerverarbeitungssystem (24), wobei jeder Produkttyp eine andere Produktidentifizierungsinformation aufweist;
Auswahl eines Lagerplatzes (15) für das Produkt, wobei der Lagerplatz (15) dazu geeignet ist, das auf ihn durch zumindest eine Produkthandhabungseinrichtung (20) zugegriffen wird und er von einer Vielzahl von individuell adressierbaren Lagerplätzen (15), die in einer Vielzahl von Lagerregalen (14) angeordnet sind, ausgewählt ist, und zumindest eines der Lagerregale (14) dazu geeignet ist, um relativ zu zumindest einem anderen Lagerregal (14) bewegt zu werden;
Steuerung der Positionen jedes der Lagerregale (14);
Lenkung der zumindest einen Produkthandhabungseinrichtung (20), um das Produkt in dem Lagerplatz (15) zu plazieren; und
Speicherung von Identifikationsinformationen zur Aufzeichnung des Lagerplatzes (15) in der Datenbank (40), die dem Produkt zugeordnet ist.

22. Verfahren nach Anspruch 21, **dadurch gekennzeichnet, daß**
vor dem Auswahlschritt der Schritt der Bestimmung einer Priorität des Produktes vorhanden ist und darüber hinaus der Auswahlschritt auf dieser Priorität basiert.

23. Verfahren nach Anspruch 22, **dadurch gekennzeichnet, daß**
die Priorität basierend auf zumindest einer der folgenden Größen bestimmt wird:
einem Bedarf, einem hochgerechneten Bedarf, einem Produkttyp und einem Ablaufdatum, der bzw. das zu dem Produkt korrespondiert.

24. Verfahren nach Anspruch 21, **dadurch gekennzeichnet, daß**
der Auswahlschritt auf der Nähe eines verfügbaren Lagerplatzes (15) zu der Handhabungsvorrichtung (20) basiert.

25. Verfahren nach Anspruch 21, **dadurch gekennzeichnet, daß**
das Verfahren ferner umfaßt:
die Schritte
Empfangen von Kundenbestellungsinformationen; und
Lenken der Produkthandhabungseinrichtung (20), um das Produkt aus einem der Lagerplätze (15) zu entnehmen, um die Kundenbestellung zu erfüllen.

26. Verfahren nach Anspruch 25, **dadurch gekennzeichnet, daß**
der Lenkungsschritt entweder das Produkt aus dem Lagerplatz (15), am besten an die Produkthandhabungseinrichtung (20), entnimmt oder das Produkt basierend auf einem Ablaufdatum des Produktes entnimmt.

27. Verfahren nach Anspruch 21, **dadurch gekennzeichnet, daß**
das Verfahren ferner den Schritt des
Empfangens eines Produktes von einem Zustellungsfördermittel (12) vor dem Eingabeschritt umfaßt, wobei der Eingabeschritt durch Scannen eines Identifikationsmittels, das mit dem Produkt korrespondiert, auftritt.

28. Verfahren nach Anspruch 21, **dadurch gekennzeichnet, daß**
das Verfahren ferner umfaßt:
Empfangen einer oder mehrerer Kundenbestellungen enthaltend eine Vielzahl von Produkttypen, wobei die Produkttypen in einer Vielzahl von Lagerplätzen (15) vorhanden sind;
Abrufen einer Vielzahl von Datensätzen für die Lagerplätze (15), die zu der Vielzahl von bestellten Produkttypen, die durch die computergesteuerte Vorrichtung gelagert werden, korrespondiert, aus der Datenbank (40); und
Entnehmen der Produkte aus den Lagerplätzen (15).

29. Verfahren nach Anspruch 28, **dadurch gekennzeichnet, daß**
der Entnahmeschritt durch Lenken der Produkthandhabungseinrichtung (20) zum Plazieren des Produktes auf einem Auslauffördermittel (16) durchgeführt wird.

30. Verfahren nach Anspruch 29, **dadurch gekennzeichnet, daß**
der Schritt des Lenkens der Produkthandhabungseinrichtung (20), um das Produkt auf dem Auslauffördermittel (16) zu plazieren, einen zusätzlichen Schritt des Lenkens der Produkthandhabungseinrichtung (20) zum Plazieren des Produktes in einem Bestellungszwischenspeicherbereich (23) mit der Vielzahl von Produkttypen in der Kundenbestellung umfaßt.

31. Verfahren nach Anspruch 28, **dadurch gekennzeichnet, daß**
der Entnahmeschritt die Auswahl des Produktes basierend auf einer der folgenden Größen umfaßt:
einem Zeitpunkt, zu dem das Produkt empfangen wurde, oder dem Platz des Produktes.

32. Verfahren nach Anspruch 22, **dadurch gekennzeichnet, daß**
der Schritt der Bestimmung einer Priorität des Produktes die Bestimmung der Priorität basierend auf zumindest einer der folgenden Größen enthält:
einem Bedarf an dem Produkt, einem hochgerechneten Bedarf an dem Produkt, einem Produkttyp und einem Ablaufdatum des Produktes.

33. Verfahren, daß von einem Computerverarbeitungssystem (24) zur Handhabung von Produkten ausgeführt wird, umfassend die Schritte:
Platzieren einer Vielzahl von Produkttypen in Lagerplätzen (15), die in verschiedenen Regalen (14) angeordnet sind;
Empfangen einer Vielzahl von Bestellungen für eine Auswahl von Produkttypen; Arbeiten mit einer begrenzten Anzahl von Bestellungen oder Produkten zur Entnahme der Produkttypen;
Entnehmen erster bestellter Produkttypen unter Verwendung eines Produkthandhabers (20), wobei die ersten bestellten Produkttypen in einem ersten Arbeitsregal (14) angeordnet sind und das erste Arbeitsregal (14) benachbart zu einem Produkthandhaber (20) angeordnet ist;
Ablegen des aus dem ersten Arbeitsregal (14) entnommenen Produkts auf einem Auslauffördermittel (16);
Plazieren eines Produktes von einem Zustellungsfördermittel (12) in Lagerplätzen (15) in dem ersten Arbeitsregal (14), bis sich entweder kein Produkt mehr auf dem Zustellungsfördermittel (12) befindet, keine weiteren offenen Lagerplätze (15) auf dem Arbeitsregal (14) vorhanden sind oder das Produkt auf dem Zustellungsfördermittel (12) nicht in dem ersten Arbeitsregal (14) plaziert werden soll;
Bewegen des ersten Arbeitsregals (14) und des Produkthandhabers (20) zum Entnehmen von zusätzlichen Produkttypen zu einem zweiten Arbeitsregal (14);
Entnehmen von zweiten bestellten Produkttypen unter Verwendung eines Produkthandhabers (20) wobei die zweiten bestellten Produkttypen auf einem zweiten Arbeitsregal (14) angeordnet sind, wobei das zweite Arbeitsregal (14) benachbart dem Produkthandhaber (20) angeordnet ist;
Ablegen des von dem zweiten Arbeitsregal (14) entnommenen Produktes auf einem Auslauffördermittel (16); und
Plazieren eines Produktes von einem Zustellungsfördermittel (12) in einem Lagerplatz (15) auf dem zweiten Arbeitsregal (14), bis sich entweder kein Produkt mehr auf dem Zustellungsfördermittel (12) befindet, keine weiteren offenen Lagerplätze (15) auf dem zweiten Arbeitsregal (14) vorhanden sind oder das Produkt auf dem Zustellungsfördermittel (12) nicht in dem zweiten Arbeitsregal (14) plaziert werden soll.

34. Verfahren nach Anspruch 33, **dadurch gekennzeichnet, daß**
der Ablegeschritt den zusätzlichen Schritt des Lenkens der Produkthandhabungseinrichtung (20) umfaßt, um das Produkt in einem Bestellungszwischenspeicherbereich (23), vor dem Ablegen der Produkte auf dem Auslauffördermittel (16), nachdem die Produkte in einer Kundenbestellung in dem Zwischenspeicherbereich (23) gesammelt wurden, zu plazieren.

35. Verfahren nach Anspruch 33, **dadurch gekennzeichnet, daß**
die Entnahme- und Plazierungsschritte gleichzeitig auftreten.

36. Verfahren nach Anspruch 33, **dadurch gekennzeichnet, daß**
die Bewegungs-, Entnahme-, Ablege- und Plazierungsschritte für dritte bestellte Produkttypen, die auf einem dritten Arbeitsregal (14), das das gleiche oder ein anderes als das erste Arbeitsregal (14) sein kann, angeordnet sind, wiederholt werden.

## Revendications

1. Dispositif (10) pour manutentionner des produits, comprenant :
■ un système de traitement informatique (24) ;
■ deux étagères de stockage (14) ou plus comprenant une pluralité d'emplacements de stockage adressables individuellement (15) pour stocker densément une pluralité de produits dans une zone centralisée dans laquelle au moins l'une desdites étagères de stockage (14) peut être déplacée par rapport à au moins une autre étagère de stockage (14) , les positions de chacune des étagères de stockage (14) sont contrôlées par ledit système de traitement informatique (24), et il peut être accédé à chacun de ces emplacements de stockage par au moins un dispositif de manutention de produits (20) ;
■ des moyens (18) pour entrer des informations d'identification pour ladite pluralité de produits dans ledit système de traitement informatique (24) ;
■ ledit au moins un dispositif de manutention de produits (20) contrôlé par ledit système de traitement informatique (24) pour placer au moins l'un de la pluralité de produits dans un emplacement de stockage qui est déterminé par ledit système de traitement informatique (24) juste avant la mise en place dudit produit ; et
■ une mémoire (36) dans ledit système de traitement informatique (24) qui stocke les informations d'identification dudit produit et ledit emplacement de stockage (15).

2. Dispositif selon la revendication 1, dans lequel ledit système de traitement informatique (24) peut déterminer ledit emplacement de stockage sur la base d'une priorité attribuée.

3. Dispositif selon la revendication 1, dans lequel ledit système de traitement informatique (24) peut déterminer ledit emplacement de stockage sur la base de la proximité d'un emplacement de stockage (15) disponible par rapport audit dispositif de manutention de produits (20).

4. Dispositif selon la revendication 1, comprenant en outre un convoyeur d'avance (12) pour transporter la pluralité de produits vers le dispositif de manutention de produits (20).

5. Dispositif selon la revendication 1, dans lequel lesdits moyens d'entrée sont un lecteur (18) pour lire des moyens d'identification associés audit au moins un produit.

6. Dispositif selon la revendication 2, dans lequel lesdits moyens d'entrée sont un lecteur (18) pour lire des moyens d'identification qui fournissent lesdites informations d'identification pour ledit produit audit système de traitement informatique (24) qui est utilisé par ledit ordinateur pour déterminer ladite priorité attribuée pour ledit produit.

7. Dispositif selon la revendication 6, dans lequel ledit lecteur (18) est un scanneur de codes-barres et lesdits moyens d'identification sont un code-barres.

8. Dispositif selon la revendication 1, dans lequel ladite mémoire dudit système de traitement informatique (24) peut stocker une fenêtre de date d'expiration du produit déterminée par ledit système de traitement informatique (24).

9. Dispositif selon la revendication 2, dans lequel ladite priorité attribuée est basée sur au moins l'une: d'une demande, d'une demande prévue, d'un type, et d'une date d'expiration d'un produit.

10. Dispositif selon la revendication 1, comprenant en outre un ou plusieurs rails (22) dans lequel ladite au moins une étagère de stockage mobile (14) est mobile le long dudit un ou plusieurs rails (22) dans au moins une direction.

11. Dispositif selon la revendication 1, dans lequel ledit au moins un dispositif de manutention de produits (20) prélève des produits spécifiés aux emplacements de stockage (15) pour lesdits produits spécifiés.

12. Dispositif selon la revendication 11, comprenant en outre un convoyeur de sortie (16) pour transporter lesdits produits prélevés depuis le dispositif de manutention de produits (20).

13. Dispositif selon la revendication 11, dans lequel au moins un dispositif de manutention de produits (20) pour placer et ledit au moins un dispositif de manutention de produits (20) pour prélever est le même dispositif de manutention de produits.

14. Dispositif selon la revendication 13, dans lequel ledit au moins un dispositif de manutention de produits (20) place et prélève en intermittence lesdits produits.

15. Dispositif selon la revendication 11, comprenant en outre au moins une zone d'entreposage temporaire (23) pour réunir lesdits produits prélevés.

16. Dispositif selon la revendication 14, dans lequel ledit au moins un dispositif de manutention de produits (20) peut prélever lesdits produits selon les commandes de client.

17. Dispositif selon la revendication 15, dans lequel ledit au moins un dispositif de manutention de produits (20) peut prélever lesdits produits selon les commandes de client, après que lesdites commandes de client sont triées et chacun desdits produits est attribué à un emplacement dans ladite zone d'entreposage temporaire (23).

18. Dispositif selon la revendication 11, dans lequel le rapport des types de produits sur les emplacements de stockage (15) est supérieur à un pour un.

19. Dispositif selon la revendication 16, dans lequel le système de traitement informatique (24) peut en outre :
■ recevoir une commande de client via un port de communication, ladite commande ayant une sélection d'un ou de plusieurs produits ; et
■ diriger ledit dispositif de manutention de produits (20) pour prélever ladite sélection de produits de la pluralité de produits dans lesdits emplacements de stockage (15).

20. Dispositif selon la revendication 1, comprenant en outre :
■ au moins un convoyeur (12, 16) pour transporter la pluralité de produits vers et depuis ledit dispositif de manutention de produits (20).

21. Procédé, réalisé par un système de traitement informatique (24), pour manutentionner des produits, comprenant les étapes consistant à :
■ entrer des informations d'identification de produit pour un produit dans une base de données (40) dans ledit système de traitement informatique (24), chaque type de produit ayant des informations d'identification de produit différentes ;
■ sélectionner un emplacement de stockage (15) pour le produit, dans lequel ledit emplacement de stockage (15) peut être accédé par au moins un dispositif de manutention de produits (20) et est sélectionné à partir d'une pluralité d'emplacements de stockage adressables individuellement (15) disposés parmi une pluralité d'étagères de stockage (14), et au moins l'une desdites étagères de stockage (14) peut être déplacée en rapport avec au moins une autre étagère de stockage (14) ;
■ contrôler les positions de chacune des étagères de stockage (14) ;
■ diriger ledit au moins un dispositif de manutention de produits (20) pour placer ledit produit dans ledit emplacement de stockage (15) ;
■ et stocker dans ladite base de données (40) associée audit produit des informations d'identification pour un enregistrement pour ledit emplacement de stockage (15).

22. Procédé selon la revendication 21, dans lequel avant ladite étape de sélection se trouve l'étape consistant à déterminer une priorité du produit, et en outre dans lequel ladite étape de sélection est basée sur ladite priorité.

23. Procédé selon la revendication 22, dans lequel la priorité est déterminée sur la base d'au moins l'une:
■ d'une demande, d'une demande prévue, d'un type de produit, et d'une date d'expiration correspondant au produit.

24. Procédé selon la revendication 21, dans lequel ladite étape de sélection est basée sur la proximité d'un emplacement de stockage (15) disponible par rapport audit dispositif de manutention de produits (20).

25. Procédé selon la revendication 21, comprenant en outre les étapes consistant à :
■ recevoir les informations de commande de client ; et
■ diriger ledit dispositif de manutention de produits (20) pour prélever un produit de l'un desdits emplacements de stockage (15) pour réaliser ladite commande de client.

26. Procédé selon la revendication 25, dans lequel ladite étape de direction prélève le produit à partir de l'emplacement de stockage (15) le plus pratique pour le dispositif de manutention de produits (20) ou prélève le produit sur la base d'une date d'expiration du produit.

27. Procédé selon la revendication 21, comprenant en outre les étapes consistant à :
■ recevoir un produit d'un convoyeur d'avance (12) avant ladite étape d'entrée dans lequel ladite étape d'entrée survient par scannage de moyens d'identification correspondant audit produit.

28. Procédé selon la revendication 21, comprenant en outre les étapes consistant à :
■ recevoir une ou plusieurs commandes de client comprenant une pluralité de types de produit, lesdits types de produit étant présents dans une pluralité d'emplacements de stockage (15) ;
■ récupérer de ladite base de données (40) une pluralité d'enregistrements pour lesdits emplacements de stockage (15) correspondant à ladite pluralité de types de produit commandés stockés par le dispositif commandé par ordinateur ; et
■ prélever lesdits produits à partir desdits emplacements de stockage (15).

29. Procédé selon la revendication 28, dans lequel l'étape de prélèvement est réalisée en dirigeant le dispositif de manutention de produits (20) pour placer le produit sur un convoyeur de sortie (16).

30. Procédé selon la revendication 29, dans lequel l'étape consistant à diriger ledit dispositif de manutention de produits (20) pour placer le produit sur un convoyeur de sortie (16) comprend une étape supplémentaire de direction dudit dispositif de manutention de produits (20) pour placer le produit dans une zone d'entreposage temporaire (23) avec la pluralité de types de produit dans ladite commande de client.

31. Procédé selon la revendication 28, dans lequel l'étape de prélèvement comprend la sélection du produit sur la base de l'un : d'une heure à laquelle le produit a été reçu ou de l'emplacement du produit.

32. Procédé selon la revendication 22, dans lequel l'étape de détermination d'une priorité du produit comprend la détermination de la priorité sur la base d'au moins l'une :
■ d'une demande du produit, d'une demande prévue du produit, d'un type de produit, et d'une date d'expiration du produit.

33. Procédé réalisé par un système de traitement informatique (24) pour manutentionner des produits, comprenant les étapes consistant à :
■ placer une pluralité de types de produit dans des emplacements de stockage (15) situés sur diverses étagères (14) ;
■ recevoir une pluralité de commandes pour une sélection de types de produit ;
■ travailler avec un nombre limité de commandes ou produits pour prélever des types de produit ;
■ prélever les premiers types de produit commandés en utilisant un manutentionnaire de produit (20), lesdits premiers types de produit commandés étant situés sur une première étagère de travail (14), ladite première étagère de travail (14) étant adjacente à un manutentionnaire de produit (20) ;
■ déposer ledit produit prélevé de ladite première étagère de travail (14) sur un convoyeur de sortie (16) ;
■ placer un produit depuis un convoyeur d'avancée (12) dans des emplacements de stockage (15) sur ladite première étagère de travail (14) jusqu'à ce qu'il n'y ait plus de produit sur ledit convoyeur d'avancée (12), qu'il n'y ait plus d'emplacements de stockage (15) ouverts sur ladite première étagère de travail (14), ou que le produit sur le convoyeur d'avancée (12) ne doive pas être placé sur ladite première étagère de travail (14) ;
■ déplacer ladite première étagère de travail (14) et ledit manutentionnaire de produit (20) pour prélever d'autres types de produit sur une deuxième étagère de travail (14) ;
■ prélever des seconds types de produits commandés en utilisant un manutentionnaire de produit (20), lesdits deuxièmes types de produit commandés étant situés sur une deuxième étagère de travail (14), ladite deuxième étagère de travail (14) étant adjacente à un manutentionnaire de produit (20) ;
■ déposer ledit produit prélevé de ladite deuxième étagère de travail (14) sur un convoyeur de sortie (16) ; et
■ placer un produit depuis un convoyeur d'avancée (12) dans des emplacements de stockage (15) sur ladite deuxième étagère de travail (14) jusqu'à ce qu'il n'y ait plus de produit sur ledit convoyeur d'avancée (12), qu'il n'y ait plus d'emplacements de stockage (15) ouverts sur ladite première étagère de travail (14), ou que le produit sur le convoyeur d'avancée (12) ne doive pas être placé sur ladite deuxième étagère de travail (14).

34. Procédé selon la revendication 33, dans lequel ladite étape de dépôt comprend l'étape supplémentaire consistant à diriger ledit dispositif de manutention de produits (20) pour placer ledit produit dans une zone d' entreposage temporaire de commande (23) avant de déposer lesdits produits sur ledit convoyeur de sortie (16) après que lesdits produits dans une commande de client ont été accumulés dans ladite zone d'entreposage temporaire (23).

35. Procédé selon la revendication 33, dans lequel lesdites étapes de prélèvement et de mise en place surviennent simultanément.

36. Procédé selon la revendication 33, dans lequel lesdites étapes de déplacement, prélèvement, dépôt et mise en place sont répétées pour de troisièmes types de produit commandés situés sur une troisième étagère de travail (14), qui peut être la même ou différente de ladite première étagère de travail (14).
